# FASCICULE DE BREVET EUROPEEN

(11) **EP 1 715 629 B1**
(45) Date de publication et mention de la délivrance du brevet: **17.12.2008**
(21) Numéro de dépôt: 06300370.1
(22) Date de dépôt: 13.04.2006
(51) Int. Cl.: H04L 12/413, B60R 16/02, H04L 12/40, H04L 29/12

(54) **Systeme d'adaptation du protocole de communication d'un calculateur embarque a bord d'un vehicule automobile**
System für die Anpassung eines Kommunikationsprotokolls mit einem in einem Fahrzeug untergebrachten Bordrechner
System for the adaptation of a communication protocol with an on-board computer of a motor vehicle

(30) Priorité: 18.04.2005 FR 0503857
(43) Date de publication de la demande: 25.10.2006
(73) Titulaire: PEUGEOT CITROËN AUTOMOBILES S.A., 78140 Vélizy Villacoublay (FR)
(72) Inventeur: Lopez, Thierry, Conflans-Sainte-Honorine 78700 (FR)
(74) Mandataire: Ménès, Catherine

(56) Documents cités:
- EP-A- 0 495 515
- US-A- 6 085 259
- US-B1- 6 216 172
- US-B1- 6 553 039

## Description

La présente invention concerne un système d'adaptation du protocole de communication d'un calculateur embarqué à bord d'un véhicule automobile.

Plus particulièrement, l'invention se rapporte à un tel système d'adaptation du protocole mis en oeuvre par un calculateur apte à être raccordé par un réseau de transmission d'informations à des outils extérieurs utilisant deux protocoles de communication différents, mettant en oeuvre des messages de question et de réponse comportant des identifiants de trame.

On sait que le développement d'un calculateur embarqué à bord d'un véhicule automobile nécessite l'utilisation de différents types d'outils associés généralement au stade particulier de développement dans lequel on se trouve.

Schématiquement, un tel développement peut être scindé en trois phases distinctes qui sont une phase de mise au point, une phase d'industrialisation et une phase de maintenance.

La phase de mise au point s'étend du début d'un projet jusqu'à la disponibilité du véhicule dans les usines de production d'un constructeur. Ce premier véhicule est alors appelé « présérie hors ligne ». Cette phase nécessite l'utilisation d'outils extérieurs au véhicule pour la réalisation des fonctions et des calibrations nécessaires par exemple à l'adaptation d'un calculateur moteur au véhicule sur lequel il sera monté.

Ces outils utilisent généralement un protocole de communication appelé « CAN CCP » (Can Calibration Protocol) bien connu dans l'état de la technique, pour s'adresser au calculateur destinataire afin par exemple de lire des paramètres fonctionnels ou encore écrire des cartographies, etc..

La phase d'industrialisation est comprise entre la réception du premier véhicule hors ligne et le lancement commercial et permet la mise au point des gammes de montage et des outils industriels. Dans cette phase, les outils extérieurs au véhicule communiquent avec le calculateur selon un protocole normalisé ISO15765, qui est également le protocole utilisé par les outils de service après-vente des constructeurs.

La phase de maintenance est utilisée aussi bien dans le réseau après-vente du constructeur pour l'entretien du véhicule que lors des contrôles techniques dans certains pays.

La communication est alors assurée entre le calculateur et l'outil extérieur, au moyen du protocole de communication ISO15765 et plus particulièrement du protocole ISO15765-4, dans le cadre d'une communication de type réglementaire associée au contrôle du système de surveillance notamment des émissions polluantes du moteur du véhicule.

Pour transmettre ou lire des informations dans un calculateur embarqué dans un véhicule automobile, tous ces outils extérieurs de communication transmettent l'ensemble de leurs requêtes ou questions via un réseau de transmission d'informations, de type par exemple CAN, relié à la prise de diagnostic centralisée du véhicule.

Ce même réseau CAN est donc mis à contribution dans les trois phases citées précédemment.

Cependant, d'autres besoins, tels que la validation d'un produit ou l'expertise d'un fournisseur, nécessitent la cohabitation de l'ensemble des protocoles au sein d'une même unité centrale de traitement d'informations afin d'en assurer la continuité du développement.

Or, cette cohabitation pour qu'elle puisse avoir lieu présente une difficulté importante.

En effet, pour qu'un véhicule actuel fonctionne correctement, de nombreux calculateurs dédiés à des fonctions spécifiques de ce véhicule, tels que par exemple un calculateur de contrôle moteur, un calculateur de boîte de vitesses, un calculateur de contrôle de suspension ou encore un calculateur d'ABS/ESP, etc..., doivent s'échanger de nombreuses informations, comme par exemple le régime moteur qui est transmis au calculateur de boîte de vitesses par le calculateur de contrôle moteur, la vitesse du véhicule qui est transmise au calculateur de contrôle moteur par le calculateur d'ABS/ESP, etc...

L'ensemble de ces échanges représente la messagerie fonctionnelle d'un véhicule. Ces informations sont regroupées en un certain nombre de trames ou messages périodiques circulant sur les différents réseaux CAN du véhicule. La périodicité de ces trames étant fonction des besoins fonctionnels, un identifiant unique est associé à chacune de ces trames en tenant compte des aspects de priorité.

En effet, un réseau tel que le réseau CAN s'appuie sur un mécanisme d'arbitrage de bus basé sur la valeur de l'identifiant (si deux trames sont transmises en même temps sur le réseau, seule celle dont l'identifiant est de plus faible valeur va être transmise, l'autre trame étant mise en attente et transmise ensuite).

II convient donc de s'assurer que l'ensemble des identifiants CAN réservés aux questions/réponses des outils/calculateurs peut cohabiter avec les autres identifiants CAN définis dans la messagerie fonctionnelle du véhicule. Ceci implique donc pour les constructeurs de définir et de gérer l'ensemble des identifiants CAN qui vont devoir circuler sur les réseaux, y compris ceux utilisés par les outils des fournisseurs, afin de s'affranchir de conflits potentiels.

Des moyens pour allouer des identifiants uniques aux calculateurs d'un réseau sont par exemple connus de US6085259 et US621172. On connait par ailleurs du brevet EP495515 un procédé d'attribution d'identifiants à des messages provenant de noeuds d'un réseau de communication permettant de réutiliser des identifiants de message lorsqu'ils ne sont plus en utilisation.

II est en effet indispensable de garantir l'unicité de chaque identifiant (lorsqu'un identifiant CAN de réponse est utilisé par un calculateur, aucun autre ne doit utiliser cet identifiant sous peine de perturbation et d'impossibilité pour l'outil de comprendre la réponse à la requête transmise).

La complexité de cette gestion apparaît alors lors de la reconduction d'un calculateur transversal monté par exemple sur quasiment toute la gamme de véhicules d'un constructeur. Afin de ne pas créer de diversité, les identifiants définis pour un véhicule sont conservés sur tous ceux sur lesquels le produit est monté.

Cette difficulté s'est par ailleurs considérablement accrue lors de la migration de la communication des calculateurs depuis leur ligne série bidirectionnelle K (conforme à la norme IS014230) vers le bus CAN, où le choix des identifiants a dû se faire en fonction des « espaces » disponibles de la messagerie fonctionnelle existante et ceci dans le respect des priorités définies.

Enfin, il convient de mentionner que le nombre d'identifiants CAN utilisables pour chaque calculateur est directement dépendant du nombre de contrôleurs CAN c'est-à-dire de composants physiques, alloués au calculateur et que l'ajout d'un nouveau contrôleur CAN même s'il peut être pris en compte lors du développement d'une nouvelle génération de calculateur, est rédhibitoire dans le cadre d'un projet déjà développé et reconduit.

Cependant, pour répondre aux différents besoins mentionnés, la demande actuelle des fournisseurs de calculateurs reste de leur réserver pour chaque calculateur connecté à un réseau CAN, 5 identifiants pour l'utilisation du protocole CAN CCP.

En exploitation, ce protocole nécessite deux identifiants pour les question/réponse - outil/calculateur et trois identifiants supplémentaires utilisés par le calculateur pour transmettre des paramètres physiques de mesure. Or, compte tenu du nombre de calculateurs potentiellement connectés sur le réseau CAN, cette demande n'est pas recevable dans la plupart des cas, soit parce que l'espace disponible des identifiants compte tenu des critères d'allocation n'existe pas, soit parce que cela peut conduire à devoir embarquer dans les calculateurs un contrôleur CAN supplémentaire comme il est décrit par exemple dans US6553039 qui propose d'utiliser un convertisseur capable d'identifier le protocole utilisé par un bus extérieur au réseau et convertir les identifiants dans le protocole propre à ce bus.

Le but de l'invention est donc de proposer un système permettant de simplifier la prise en compte de cette demande tant en termes de gestion que de coût pour les calculateurs embarqués. A cet effet, l'invention a pour objet un système d'adaptation du protocole de communication d'un calculateur embarqué à bord d'un véhicule automobile, apte à être raccordé par un réseau de transmission d'informations à des outils extérieurs à celui-ci, utilisant deux protocoles de communication différents, en mettant en oeuvre des messages de question et de réponse comportant des identifiants, caractérisé en ce que les identifiants utilisés dans les deux protocoles sont les mêmes mais inversés, un identifiant correspondant à un message de question pour l'un des protocoles et à un message de réponse pour l'autre protocole et en ce que le calculateur comporte des moyens de reconnaissance du protocole utilisé par l'outil qui lui est raccordé à partir de l'identifiant contenu dans le message de question pour émettre un message de réponse contenant un identifiant correspondant à ce protocole.

Suivant d'autres caractéristiques :
- l'un des protocoles est le protocole CAN CCP et l'autre protocole est le protocole ISO115765;
- le réseau de transmission d'informations est un réseau de type CAN.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant le raccordement d'un outil de communication extérieur au véhicule à différents calculateurs embarqués ;
- les Fig. 2 et 3 illustrent l'adaptation de protocole mise en oeuvre dans un système d'adaptation selon l'invention ; et
- la Fig.4 représente un organigramme de reconnaissance de protocole et d'adaptation du protocole utilisé par un calculateur, mis en oeuvre dans un système selon l'invention.

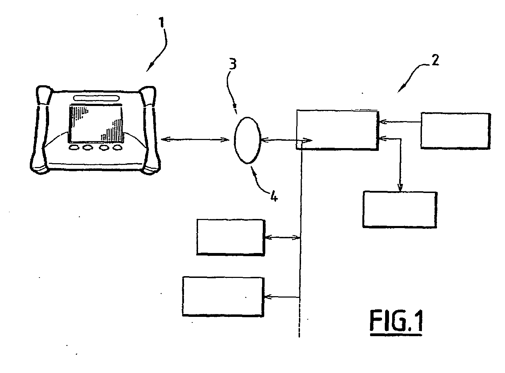

On a en effet illustré sur la figure 1, un schéma synoptique illustrant le raccordement d'un outil de communication extérieur au véhicule, désigné par la référence générale 1, à un ensemble de calculateurs de bord embarqué à bord du véhicule automobile, cet ensemble de calculateurs étant désigné par la référence générale 2.

Ce raccordement est par exemple assuré à travers un réseau de transmission d'informations désigné par la référence générale 3 et comprenant par exemple un réseau de type CAN ou autre.

Un connecteur centralisé du véhicule désigné par la référence générale 4 est utilisé pour assurer le raccordement de l'outil à l'ensemble de calculateurs.

Cet ensemble de calculateurs peut comporter un certain nombre de calculateurs, tels que par exemple un calculateur de boîte de vitesses, un calculateur de contrôle moteur, un calculateur de boîtier de servitude, un calculateur de combiné, etc..

Un réseau de transmission d'informations de type CAN intersystème peut également être utilisé pour raccorder différents calculateurs entre eux.

Comme cela a été indiqué précédemment, des outils de communication extérieurs utilisant deux protocoles de communication différents peuvent être raccordés à ces calculateurs.

En effet, un outil de communication utilisant le protocole de communication CAN CCP et un outil de communication utilisant le protocole de communication ISO15765, peuvent être raccordés à cet ensemble de calculateurs, comme cela a été expliqué précédemment.

Pour résoudre les problèmes mentionnés précédemment, le système selon l'invention permet l'utilisation au sein d'un même calculateur des mêmes identifiants de messages pour les questions/réponses à la fois pour le protocole CAN CCP et le protocole ISO15765. Cependant, pour que cela puisse fonctionner, ces identifiants sont inversés. Autrement dit, l'identifiant d'un message utilisé par un outil pour poser une question au calculateur selon le protocole ISO15765, sera également utilisé par le calculateur pour répondre à la question d'un outil utilisant le protocole CAN CCP pour poser une question.

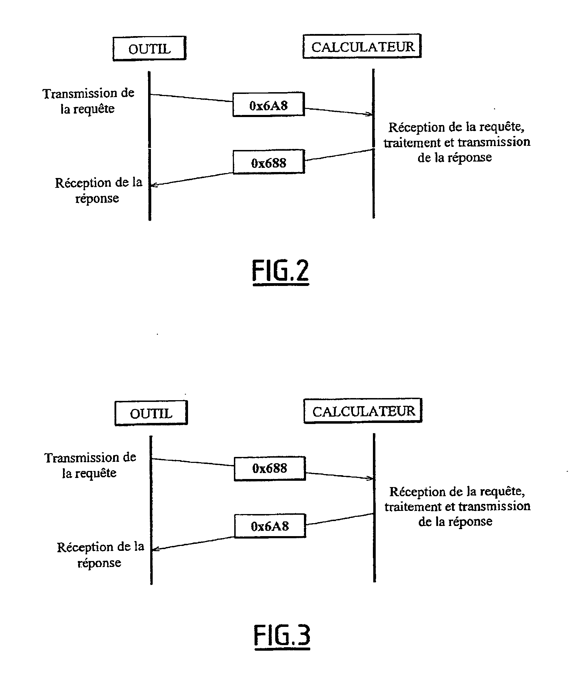

Ce fonctionnement est illustré plus en détail sur les figures 2 et 3.

La figure 2 illustre le fonctionnement dans le cas où l'outil extérieur utilise le protocole de communication ISO15765. L'outil transmet alors une requête ou une question en utilisant un identifiant Ox6A8 à destination du calculateur embarqué. Ce calculateur reçoit alors cette requête, la traite et transmet la réponse en utilisant l'identifiant 0x688.

Si l'outil extérieur utilise le protocole CAN CCP, celui-ci transmet une requête en utilisant l'identifiant 0x688. Ce message de requête est reçu par le calculateur, qui le traite et peut alors transmettre une réponse en utilisant l'identifiant 0x6A8.

La cohabitation nécessaire de protocoles au sein d'une même unité de traitement n'implique pas qu'ils puissent être utilisés simultanément compte tenu du fait qu'un unique outil reste connectable au réseau, c'est-à-dire au calculateur. Autrement dit, avec un tel système on peut parfaitement utiliser alternativement tel ou tel protocole de communication.

Chaque calculateur embarqué dispose donc d'une fonction d'autodétection du protocole utilisé par l'outil en fonction de l'identifiant des messages transmis pour ouvrir une session de communication et d'adaptation du protocole utilisé pour la réponse.

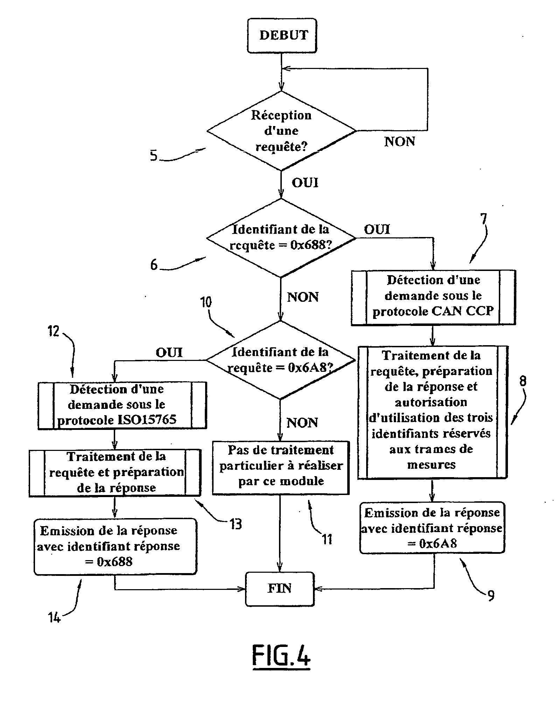

Ceci est par exemple illustré sur la figure 4, où l'étape 5 illustre un test pour déterminer si le calculateur a reçu une requête ou non.

Si c'est le cas, le calculateur cherche alors à reconnaître le protocole utilisé par l'outil qui lui est raccordé en analysant l'identifiant contenu dans le message. Cet identifiant reçu dans le message est par exemple comparé à un identifiant prédéterminé, tel que l'identifiant 0x688 lors de l'étape 6.

Si c'est le cas, le calculateur détecte alors en 7, une requête émise conformément au protocole CAN CCP. En 8, le calculateur traite cette requête, prépare la réponse et reçoit une autorisation d'utilisation des trois identifiants réservés aux trames de mesure par exemple.

En 9, le calculateur émet la réponse en utilisant l'identifiant de réponse 0x6A8 correspondant à ce protocole CAN CCP.

Si la réponse au test en 6, concernant la reconnaissance de l'identifiant particulier, est négative, en 10, l'identifiant du message reçu est comparé à l'identifiant 0x6A8. Si la réponse à ce test est négative, en 11, le calculateur n'a pas de traitement particulier à réaliser pour ce module.

Par contre, si la réponse au test en 10 est positive, le calculateur détecte une requête émise conformément au protocole ISO15765, lors de l'étape 12.

En 13, la requête est traitée et la réponse est préparée avant d'être émise en 14 par le calculateur, en utilisant un identifiant de réponse correspondant à ce protocole, c'est-à-dire l'identifiant 0x688.

On conçoit alors que dans un tel système, les identifiants utilisés dans les deux protocoles sont les mêmes, mais inversés, un identifiant correspondant à un message de question pour l'un des protocoles et à un message de réponse pour l'autre protocole et inversement.

Le calculateur comporte alors des moyens de reconnaissance du protocole utilisé par l'outil qui lui est raccordé à partir de l'identifiant contenu dans un message de question pour émettre un message de réponse contenant un identifiant correspondant à ce protocole.

L'exemple de la figure 4 est une demande dans le cas d'un calculateur de contrôle moteur utilisant des identifiants de type 0x6A8 et 0x688.

D'autres exemples peuvent bien entendu être envisagés.

Il est à remarquer que les identifiants ainsi définis ont sensiblement les mêmes niveaux de priorité sur le bus CAN (0x6XX dans le cadre de l'exemple du calculateur de contrôle moteur), quelque soit le protocole utilisé, de telle sorte que les demandes en provenance des outils influent le moins possible sur les échanges fonctionnels entre calculateurs, c'est-à-dire ce qui fait fonctionner le véhicule.

Les identifiants affectés au protocole CAN CCP sont donc définis dans les mêmes plages que celles qui ont été choisies pour les outils de série, garantissant ainsi de ne pas perturber le véhicule lors de l'exploitation de l'outil.

De plus, il est également possible de réserver les trois mêmes identifiants de mesure (trames de mesure du protocole CCP) pour tous les calculateurs d'un véhicule compte tenu du fait qu'ils ne peuvent être utilisés, c'est-à-dire transmis par un calculateur, qu'à partir du moment où une session de communication CCP est active.

Il va de soi bien entendu que d'autres modes de réalisation encore peuvent être envisagés et que les identifiants mentionnés précédemment n'ont été utilisés qu'à titre d'exemple pour illustrer le fonctionnement du système selon l'invention.

## Revendications

1. Système d'adaptation du protocole de communication d'un calculateur embarqué à bord d'un véhicule automobile, apte à être raccordé par un réseau de transmission d'informations (3) à des outils (1) extérieurs à celui-ci, utilisant deux protocoles de communication différents, en mettant en oeuvre des messages de question et de réponse comportant des identifiants, **caractérisé en ce que** les identifiants utilisés dans les deux protocoles sont les mêmes mais inversés, un identifiant correspondant à un message de question pour l'un des protocoles et à un message de réponse pour l'autre protocole et **en ce que** le calculateur comporte des moyens (6,7,10,12) de reconnaissance du protocole utilisé par l'outil (1) qui lui est raccordé à partir de l'identifiant contenu dans le message de question pour émettre un message de réponse contenant un identifiant correspondant à ce protocole.

2. Système selon la revendication 1, **caractérisé en ce que** l'un des protocoles est le protocole CAN CCP et l'autre protocole est le protocole ISO15765.

3. Système selon la revendication 1 ou 2, **caractérisé en ce que** le réseau de transmission d'informations est un réseau de type CAN.

## Claims

1. System for adapting the communication protocol of an embedded computer onboard a motor vehicle, able to be linked up by an information transmission network (3) to tools (1) external to the latter, using two different communication protocols, by implementing question and answer messages comprising identifiers, **characterized in that** the identifiers used in the two protocols are the same but inverted, an identifier corresponding to a question message for one of the protocols and to an answer message for the other protocol and **in that** the computer comprises means (6,7,10,12) for recognizing the protocol used by the tool (1) which is linked up thereto on the basis of the identifier contained in the question message so as to emit an answer message containing an identifier corresponding to this protocol.

2. System according to Claim 1, **characterized in that** one of the protocols is the CCP CAN protocol and the other protocol is the ISO15765 protocol.

3. System according to Claim 1 or 2, **characterized in that** the information transmission network is a network of CAN type.

## Patentansprüche

1. System zur Anpassung des Kommunikationsprotokolls eines an Bord eines Kraftfahrzeugs vorhandenen Steuergeräts, das dazu geeignet ist, über ein Informationsübertragungsnetz (3) mit externen Werkzeugen (1) verbunden zu werden, wobei zwei verschiedene Kommunikationsprotokolle verwendet werden und Abruf- und Antwortmeldungen, die Identifikatoren aufweisen, eingesetzt werden, **dadurch gekennzeichnet, dass** die in den zwei Protokollen verwendeten Identifikatoren die gleichen, jedoch vertauscht, sind, wobei ein Identifikator einer Abrufmeldung für eines der Protokolle und einer Antwortmeldung für das andere Protokoll entspricht, und dass das Steuergerät Mittel (6, 7, 10, 12) zur Erkennung des Protokolls, das das mit ihm verbundene Werkzeug (1) verwendet, ausgehend von dem in der Abfragemeldung enthaltenen Identifikator aufweist, um eine Antwortmeldung auszugeben, die einen diesem Protokoll entsprechenden Identifikator enthält.

2. System nach Anspruch 1, **dadurch gekennzeichnet, dass** eines der Protokolle das Protokoll CAN CCP und das andere Protokoll das Protokoll ISO 15765 ist.

3. System nach Anspruch 1 oder 2, **dadurch gekennzeichnet, dass** das Informationsübertragungsnetz ein Netz vom Typ CAN ist.
